# EUROPEAN PATENT APPLICATION

(11) **EP 2 674 784 A1**
(43) Date of publication of application: **18.12.2013**
(21) Application number: 12171511.4
(22) Date of filing: 11.06.2012
(51) Int. Cl.: G01S 19/24, G01S 19/37, G01S 19/14, G01S 19/09

(54) **Satellite positioning with mixed capture-parameters**

(71) Applicant: U-blox AG, 8800 Thalwil (CH)
(72) Inventor: Marshall, Christopher, Reigate, Surrey RH2 9QQ (GB); Yule, Andrew, Reigate, Surrey RH2 9QQ (GB)
(74) Representative: O'Callaghan, Robert James

(57) **Abstract**

A method of recording satellite signals for later processing to derive position information. The method comprises: (i) receiving (210) and digitising (212) first satellite signals using a first set of parameters, to produce a first block of satellite signal samples, and storing (214) the first block in a memory; (ii) receiving (230) and digitising (232) second satellite signals using the first set of parameters, to produce a second block of satellite signal samples, and storing (234) the second block in the memory; (iii) receiving (240) and digitising (242) third satellite signals using a second set of parameters, to produce a third block of satellite signal samples, and storing (244) the third block in the memory; and (iv) receiving (260) and digitising (262) fourth satellite signals using the second set of parameters, to produce a fourth block of satellite signal samples, and storing (264) the fourth block in the memory, wherein a first predetermined time interval between the reception of the first and second satellite signals is longer than a second predetermined time interval between the reception of the third and fourth satellite signals, and the first and second sets of parameters are chosen such that a resource consumed in each of steps (i) and (ii) is greater than a corresponding resource consumed in each of steps (iii) and (iv).

## Description

This invention relates to a receiver and a method of receiving satellite signals suitable for a Global Navigation Satellite System (GNSS). In particular, the present invention relates to a receiver which receives, digitises and stores satellite signals for later processing to calculate a position fix.

One prominent example of a GNSS is the Global Positioning System (GPS). GPS is a satellite-based navigation system consisting of a network of up to 32 orbiting satellites (called space vehicles, "SV") that are in six different orbital planes. 24 satellites are required by the system design, but more satellites provide improved coverage. The satellites are constantly moving, making two complete orbits around the Earth in just less than 24 hours.

The GPS signals transmitted by the satellites are of a form commonly known as Direct Sequence Spread Spectrum (DSSS) employing a pseudo-random code which is repeated continuously in a regular manner. The satellites broadcast several signals with different spreading codes including the Coarse / Acquisition or C/A code, which is freely available to the public, and the restricted Precise code, or P-code, usually reserved for military applications. The C/A code is a 1,023 bit long pseudo-random code broadcast with a chipping rate of 1.023 MHz, repeating every millisecond. Each satellite sends a distinct C/A code, which allows it to be uniquely identified.

A data message is modulated on top of the C/A code by each satellite and contains important information such as detailed orbital parameters of the transmitting satellite (called ephemeris), information on errors in the satellite's clock, status of the satellite (healthy or unhealthy), current date, and time. This information is essential for determining the position of a GPS receiver accurately. Each satellite only transmits ephemeris and detailed clock correction parameters for itself.

The data message also contains the so called almanac, which comprises less accurate information about all the other satellites and is updated less frequently. The almanac data allows a GPS receiver to estimate where each GPS satellite should be at any time throughout the day so that the receiver can choose which satellites to search for more efficiently.

A conventional, real-time GPS receiver reads the transmitted data message and saves the ephemeris, almanac and other data for continual use.

To determine position, a GPS receiver compares the time a signal was transmitted by a satellite with the time it was received by the GPS receiver. The time difference tells the GPS receiver how far away that particular satellite is. The ephemeris for that satellite enables the GPS receiver to determine the position of the satellite accurately. By combining distance measurements from multiple satellites with the knowledge of their positions, position can be obtained by trilateration. With a minimum of three satellites, a GPS receiver can determine a latitude/longitude position (a 2D position fix). With four or more satellites, a GPS receiver can determine a 3D position which includes latitude, longitude, and altitude. The information received from the satellites can also be used to set (or correct) the real-time clock (RTC) within the GPS receiver.

By processing the apparent Doppler shifts of the signals from the satellites, a GPS receiver can also accurately provide speed and direction of travel (referred to as 'ground speed' and 'ground track', respectively).

A complete data signal from the satellites consists of a 37,500 bit Navigation Message, which takes 12.5 minutes to send at 50 bps. The data signal is divided into 25 30s frames, each having 1500 bits and these are divided into five 6s subframes. Each 6s subframe is divided into ten 30 bit words. All the information necessary for a position fix (ephemeris etc) is contained within each frame and so a GPS receiver will typically take around 30s to produce a position fix from a so-called cold start. This is often called "time to first fix" (TTFF).

The first subframe gives clock correction data, the second and third subframes give ephemeris data and the almanac data is in the fourth and fifth subframes.

The SVs all broadcast on the same frequency. In order to distinguish a signal from a particular satellite, the receiver needs to generate a replica of the C/A code known to be in use by that satellite and align it so that it is synchronised with the incoming signal which will be delayed by an unknown amount predominantly due to the time of flight of the signal in travelling from the satellite to the receiver (typically around 0.07s). In general, it is not possible for a receiver to accurately predict the alignment necessary to get the replica in sync with the incoming signal, so some form of search is required, with a number of alignments being tried in turn and the best match being selected. This process of evaluating a number of candidate alignments is normally termed correlation as the receiver implements a correlation function between the received signal and the known C/A code for each satellite in turn, to determine if the received signal includes a component having the C/A code from a particular SV. The correlation function has to be calculated for multiple relative timings, and when the correlation peak is found, this corresponds to a particular timing and a particular SV. The discovered timing in turn corresponds to a particular distance from the SV.

The search for each satellite C/A code is complicated by the fact that the apparent frequency of the satellite signal observed by the receiver will vary. The principal sources of variation are the Doppler-effect due to the movement of the satellite; Doppler-effect due to movement of the receiver; and the drift and offset of the local oscillator (LO) unit within the receiver's frequency synthesizer. This means that an exhaustive search for the C/A code requires the evaluation of the correlation function at a range of phase (temporal) shifts for each of a range of frequency shifts.

The correlation process is sometimes referred to as "despreading", since it removes the spreading code from the signal. The determined code-phase - that is, the timing of the peak of the correlation function - reveals the accurate timing information for use in the distance calculation. However, as the code is repeated every millisecond, the coarse timing also needs to be determined. Typically, less frequently repeating data components are used for the more coarse timing evaluation (i.e. to enable GPS time to be derived), such as the individual bits of the 50bps data message and specific parts of it such as the subframe preamble or subframe handover word.

Together, the code-phase and coarse timing information comprise a "pseudo-range", because they identify the time-of-flight of the message from the satellite. This time-of-flight is related to the distance travelled by c, the speed of light. This is a "pseudo"-range or relative range (rather than a true range) because the relative offset between the satellite's clock and the receiver's RTC is unknown. However, this offset is the same relative to all satellites (since their clocks are synchronized); so, pseudo-ranges for a set of diverse satellites provide sufficient information for the trilateration calculation to determine a unique position fix.

The majority of GPS receivers work by processing signals from the satellites in "real time", as they are received, reporting the position of the device at the current time. Such "conventional" GPS receivers invariably comprise:
- an antenna suitable for receiving the GPS signals,
- analogue RF circuitry (often called a GPS front-end) designed to amplify, filter, and mix down to an intermediate frequency (IF) the desired signals so they can be passed through an appropriate analogue-to-digital converter (ADC) at a sample rate normally of the order of a few MHz,
- digital signal processing hardware that carries out the correlation process on the IF data samples generated by the ADC, normally combined with some form of microcontroller that carries out the "higher level" processing necessary to control the signal processing hardware and calculate the desired position fixes.

The less well known concept of "Store and Process Later" (also known, and hereinafter referred to, as "Capture-and-Process") has also been investigated. This involves storing the IF data samples collected by a conventional antenna and analogue RF circuitry in some form of memory before processing them at some later time (seconds, minutes, hours or even days) and often at some other location, where processing resources are greater and the receiver is not powered by a battery.

This means that a Capture-and-Process receiver is considerably simpler than a real-time receiver. Only short segments of samples need to be stored - for example, 100-200ms worth of data. There is no longer any need to decode the (very slow) data message from each SV; no need to perform correlation and determine pseudo-ranges; and no need to execute the trilateration calculation to derive a position fix. Accordingly, much of the digital signal processing hardware of the conventional receiver can be eliminated, reducing complexity and cost. Power consumption is also significantly reduced, leading to longer battery life.

Other Capture-and-Process receivers have also been proposed which include the DSP hardware necessary for calculating position fixes. In one mode, such a device receives, samples and stores GPS signals in a memory, but does not process them. When switched to a separate mode, the device ceases receiving signals and instead starts processing those samples which were stored previously. A device of this kind is suitable for generating a retrospective track-log, or history of movements, for example after the user has returned from a trip.

Such a device can also be used to find a previous known location. The device is configured in a capture mode, and stores a log of signal captures. As noted, the power consumption of such a mode can be low. If the device is then at some time, T', requested for a real time position fix, it attempts to perform the position fix using the signals currently available (at T'). If sufficient GPS signals are visible then it is able to measure the pseudoranges and calculate and report the position. However, if the signal environment is difficult at T' (perhaps because the device is indoors), a GPS position fix may then not be possible. In a device of this kind with a capture mode, the GPS signals previously received, sampled and stored in a memory during the capture mode can then be analysed, to establish a previous location. This is not as accurate as the current location, but at least provides some location information. This can be provided to the application as described in US 7,561,101.

Having established a previous location the device may then optionally be switched back to real-time mode, and the previous location established from the Capture-and-Process measurement used to assist the GPS receiver in attempting to find the current location at T' (as estimates of timing and position are now available to the real time processing engine, facilitating the search for weak satellite signals).

A problem of Capture-and-Process receivers is that, because the satellite signals are not processed immediately upon reception, there is no guarantee that they have been received clearly enough to enable a position fix to be calculated. As explained above, a successful position fix requires the signals of multiple satellites to be detectable in the captured GPS signal samples. Thus, the Signal-to-Noise Ratio (SNR) of the satellite signals must be above some minimum threshold. The SNR may be reduced in difficult signal environments, such as indoors in a building or in dense urban environments, by obstacles preventing propagation of the signal from the satellite to the receiver (and thereby reducing the received signal strength). The SNR may also be reduced by interference (noise) from other sources, which may be accidental or a result of deliberate jamming. Unlike a real-time GPS receiver, which can immediately detect the reduction in SNR and respond accordingly, the Capture-and-Process receiver is unaware of the problem.

For example, a real-time receiver can respond to loss of reception either by repeating the position calculation with freshly received signals after a short delay (by which time conditions will hopefully have improved), or by increasing the sensitivity of the processing it performs, or both. The processing can be made more sensitive, for example, by increasing the coherent integration time of the correlation calculation.

In contrast, the Capture-and-Process receiver does not have the opportunity to re-try, because the low SNR will typically not be determined until a much later time, when the receiver is in a different place. Furthermore, the sensitivity of the processing that can be applied to the stored signal samples may be inherently limited by the quantity and resolution of satellite signal data that was originally captured.

According to a first aspect of the invention there is provided a method of recording satellite signals for later processing to derive position information, the method comprising:
(i) receiving and digitising first satellite signals using a first set of parameters, to produce a first block of satellite signal samples, and storing the first block in a memory;
(ii) receiving and digitising second satellite signals using the first set of parameters, to produce a second block of satellite signal samples, and storing the second block in the memory;
(iii) receiving and digitising third satellite signals using a second set of parameters, to produce a third block of satellite signal samples, and storing the third block in the memory; and
(iv) receiving and digitising fourth satellite signals using the second set of parameters, to produce a fourth block of satellite signal samples, and storing the fourth block in the memory,
wherein a first time interval between the reception of the first and second satellite signals is longer than a second interval between the reception of the third and fourth satellite signals,
the duration of each of the first and second intervals is predetermined, and
the first and second sets of parameters are chosen such that a resource consumed in each of steps (i) and (ii) is greater than a corresponding resource consumed in each of steps (iii) and (iv).

The present inventors have recognised that the environment encountered by a Capture-and-Process satellite positioning receiver varies, in practical use. For example, there may be long periods when satellite signals are weak (that is, reception is poor), while the user of the device is indoors. These may be interspersed with brief periods when signals are strong (that is, reception is good), while the user is outdoors - for example walking from one building to another building, or before getting into a vehicle for a longer journey. These periods with strong signals are often brief, and so captures have to take place frequently if the chance of taking a capture under these (easy) conditions is to be high. There may then be moderate periods of medium signal strength (medium reception quality) while the user is in a car or on board a train. The satellite positioning receiver will typically have no way to distinguish between these different environments, in real time. This would suggest that satellite signals should be captured with maximum sensitivity, in order to provide the best possible chance of being able to calculate a position fix, even in the worst-case signal environment. However, it will typically be impractical or costly to capture satellite signals with the characteristics that give maximum sensitivity, sufficiently frequently to be confident of receiving and storing a capture when the conditions are good. The attempt to do both - frequent, 'sensitive' captures - limits the period of time for which the device can be used to build a log of captures.

The present inventors have also recognised that the variation in signal-reception conditions can be exploited, in order to solve this problem of scarce resources and develop an efficient and effective strategy for capturing satellite signals for later position-determination. In particular, they have recognised that more resource-intensive snapshots of satellite signals can be recorded at widely spaced intervals, and - concurrently - less resource-intensive snapshots can be recorded at more closely spaced intervals. The more frequent, less demanding snapshots can ensure that the satellite positioning receiver does not miss an opportunity to capture signals in a good reception environment. Meanwhile, the less frequent, more demanding snapshots are designed to cope with periods of poor reception. This strategy may be particularly effective for some common practical usage scenarios. The user will typically move very little when in difficult signal environments, such as indoors - which means that it is sufficient to determine the device's position at relatively long intervals. When the user is moving faster, outdoors or in transit, the signal conditions will be relatively better - so snapshots that are less resource-intensive will be sufficient to determine position; however, under these conditions, it is desirable to determine position at shorter intervals, both because the device may be moving faster, requiring a position update, and because the periods of time for which these favourable environmental conditions are maintained are typically shorter.

Embodiments of the present method can therefore help to increase the length of time that a Capture-and-Process satellite positioning receiver can remain in continuous use. The usage-period may be limited by battery-life and/or data-storage capacity. Methods according to the present invention can be designed to use either or both of these resources more efficiently. This is particularly desirable when the receiver is incorporated in a portable electronic device, which may have particularly limited energy and data-storage resources. To state the advantage in another way: for a given product usage lifetime (total resource constraint) the resources that can be allocated to each "sensitive" capture can be increased, increasing the chances of success for an indoor fix. Alternatively or in addition, the interval between "simple" captures can be reduced, increasing the chance that a capture is received, sampled and stored when the device is outside. This will give more fixes, and better detail in tracking a position.

Yet more benefits may be achieved in other circumstances. Consider a Capture-and-Process camera which is configured to collect a log of captures together with a capture when an event occurs (for example a photo is taken, which is to be geotagged). Later, all the captures are processed. The position fix for the event capture may be unsuccessful (for example, because the camera was indoors at the time the photo was taken). In this case, the processing can fall back to analyzing the log of captures from either before or after the event, to try to calculate position fixes from these captures. Preferably, captures from both before and after will be used, so that the position geotag of the event can be deduced by interpolation. Using a pattern of captures according to an embodiment of the present invention increases the likelihood that there will be a successful capture that can be processed - for example, a capture from just before the device entered the building (the last known position before the event), and, working forward in time, from just after the device left the building (the next known position after the event. Either or both of these can (i) help bracket or indicate the position to report to the application as a Geotag; and/or (ii) provide a position and time estimate to assist the processing engine to find satellite signals and measure pseudoranges in its further analysis of the stored log and event captures to attempt to further narrow down or establish the location of the event.

In the method summarised above, the duration of the time intervals is "predetermined" in the sense that the duration of each interval is fixed before it begins to elapse (at the latest). That is, when step (i) is performed, the duration of the first time interval is known and this determines the length of time that will elapse before step (ii) is performed. Similarly, the duration of the second time interval is predetermined in that this duration is known and fixed before or when step (iii) is performed. The first and second time intervals may each be implemented by a simple counter, for example. The counter may be reset each time a step of receiving, digitising and storing satellite signals is initiated. It then counts down to zero and upon reaching zero, the next step of receiving, digitising and storing satellite signals is initiated. Needless to say, in an alternative example, the counter may count up instead of down.

Preferably, the duration of the time intervals is pre-programmed - for example, during configuration of the satellite positioning receiver, before use. Each time interval may preferably be at least 1s long. Each time interval may preferably be less than or equal to 1 hr, more preferably 10mins.

At least one parameter in the first set of parameters is different from the corresponding parameter in the second set of parameters.

The first and second blocks are preferably successive blocks of the same type (that is, received, digitised and stored according to the same set of parameters). Likewise, the second and third blocks are also preferably successive blocks of the same type.

At least one of steps (iii) and (iv) is preferably performed during the first time interval.

This means that the reception, digitisation and storage in the memory of blocks of samples according to the first and second parameters, respectively, is interleaved.

Also provided is a method of recording satellite signals for later processing to derive position information, the method comprising:
(i) receiving and digitising first satellite signals using a first set of parameters, to produce a first block of satellite signal samples, and storing the first block in a memory;
(ii) receiving and digitising second satellite signals using the first set of parameters, to produce a second block of satellite signal samples, and storing the second block in the memory; and
(iii) receiving and digitising third satellite signals using a second set of parameters, to produce a third block of satellite signal samples, and storing the third block in the memory,
wherein a first time interval between the reception of the first and second satellite signals is greater than a second interval between the reception of the third satellite signals and the nearest in time of the first and second satellite signals,
the first and second intervals have predetermined durations, and
the first and second sets of parameters are chosen such that a resource consumed in each of steps (i) and (ii) is greater than a corresponding resource consumed in step (iii).

The first and second sets of parameters may be chosen such that a block of samples produced by using the second set of parameters can be considered equivalent to a subset of the block of samples that would be produced by using the first set of parameters. For example, the duration over which satellite signals are received and digitised may be longer, according to the first set of parameters. In this case, a block according to the second set of parameters may be extracted from the block produced using the first set of parameters by truncating the block. Similarly, the first set of parameters may specify that a sampling frequency of the samples is higher than the sampling frequency according to the second set of parameters. In this case, a block of samples according to the second set could be extracted from a block produced using the first set of parameters by decimation.

The method may further comprise iterating the steps (i) to (iv) or (i) to (iii) in a predetermined pattern.

This provides a predetermined repeating pattern in time, comprising a mix of: receiving and digitising satellite signals using the first set of parameters; and receiving and digitising satellite signals using the second set of parameters.

The resource consumed may comprise at least one of: electrical energy; and storage capacity in the memory.

The electrical energy may be consumed in the process of receiving, digitising, and storing the satellite signals. The storage capacity may be that occupied in the memory by the respective block of samples. The first and second blocks of samples may comprise at least a first volume of data; and the third block (and optional fourth block) may comprise a second volume of data, which is greater than the first volume.

The first and second sets of parameters optionally differ by at least one, or any combination, of: the length of a time interval during which the satellite signals are received and digitised to be stored; a sampling frequency at which the satellite signals are digitised; an effective sampling frequency of the block of signal samples stored in the memory; a first number of quantised levels with which the satellite signals are digitised; and a second number of quantised levels with which the satellite signals are stored in the memory.

The sampling frequency upon digitisation may be determined by the rate at which an analogue-to-digital Converter (ADC) samples a received analogue signal and outputs digital samples.

The effective sampling frequency of the stored signal samples means the number of samples per unit time in the block. If all of the samples digitised are stored in the memory, then the effective sampling frequency is identical to the actual sampling frequency of digitisation. However, in some embodiments, it is possible that fewer samples are stored in the memory than were digitised. For example, down-sampling may occur by discarding samples and/or using a decimation filter. In this case the effective sampling frequency in the block of samples may be less than the actual sampling frequency upon digitisation.

Similarly, the second number of quantised levels (with which the satellite signals are stored in the memory) may be less than or equal to the first number of levels (with which they were digitised). The number of quantised levels refers to the bit-resolution of each sample - for example, 1 bit per sample or 2 bits per sample. The bit resolution upon digitisation may optionally be reduced before the samples are stored - for example by discarding one or more least significant bits.

The duration of each capture - that is, the length of the time interval during which satellite signals are received and digitised to be stored - is preferably less than 6s, more preferably less than 1s, still more preferably 500ms or less. Furthermore, it may be at least 20ms, or more particularly at least 100ms.

The bit resolution is preferably in the range 1 to 4 bits per sample.

At least one, or any combination, of the following conditions may be true: the length of the time interval may be longer for the first set of parameters than the second set; the sampling frequency may be greater for the first set of parameters than the second set; the effective sampling frequency may be greater for the first set of parameters than the second set; the first number of quantised levels may be greater for the first set of parameters than the second set; and the second number of quantised levels may be greater for the first set of parameters than the second set.

The method may further comprise storing in the memory a description of the first and second sets of parameters, comprising either: storing a description of the first set of parameters in association with each of the first and second blocks of samples, respectively, and storing a description of the second set of parameters in association with each of the third and fourth blocks of samples, respectively; or storing a description of the first and second sets of parameters, together with an indication of the blocks of samples to which each set of parameters relates.

Storing information about the parameters may assist the subsequent processing of the blocks of samples to calculate a position fix, since this information can be used to interpret the contents of the blocks. As summarised in the first alternative above, each block may have associated with it a copy of the parameters that were used to capture it. For example, the parameters may be provided as a header-part of a file which contains a single block of samples. However, if a large number of blocks is recorded with a small number of different sets of parameters, then there will be many similar blocks of the same type. In this case it may be more efficient to use the second alternative summarised above. With this alternative, combined information about the first and second sets of parameters is stored - preferably in a single instance. The information also describes which set of parameters pertains to which block. This indication may be provided by describing the pattern of interleaving of the blocks of each different type.

The first set of parameters is preferably chosen so as to provide greater sensitivity for the detection of satellite signals than the second set of parameters.

Sensitivity may be characterised in a number of ways. For example, a Signal-to-Noise Ratio of each of the first and second blocks may be higher than that of the third and fourth blocks, for received satellite signals of uniform strength. Alternatively or in addition, it may be possible to detect weaker satellite signals from the first and second blocks, compared with the third and fourth blocks. For example, the second set of parameters may be chosen so that it is possible to detect a satellite signal received in a typical outdoor environment, from the third and fourth samples whereas the first set of parameters may be chosen such that it is possible to detect a satellite signal received in typical indoor - as well as outdoor - conditions.

The method may further comprise: retrieving each block of samples from the memory; and processing the block of samples to identify individual satellite signals contained in the samples, wherein the processing applied to the first and second blocks is more sensitive to satellite signals than the processing applied to the third and/or fourth blocks.

The processing may comprise despreading the satellite signals. The processing may further comprise extracting a ranging measurement (such as a code-phase of a spreading code; a carrier-phase; and/or a pseudo-range to the respective satellite).

The method may further comprise retrieving from the memory a description of the first and second sets of parameters, wherein the processing applied to the first and second blocks is dependent upon the retrieved parameters.

Optionally, the steps of retrieving the blocks of samples from the memory and processing each block of samples may be performed in response to a request to calculate a last known position of the satellite positioning receiver which received the satellite signals.

Optionally, the more sensitive processing applied to the first and second blocks comprises at least one of: correlation over a longer coherent integration period; correlation over a longer non-coherent integration period; correlation with a function that has a greater number of quantised levels.

Also provided is a computer program comprising computer program code means adapted to control a satellite positioning receiver and optionally a computer to perform all the steps of any preceding claim when said program is run.

The steps of retrieving the blocks of samples from the memory and processing them (as summarised above) may be performed by the computer. This computer may be physically separate from the satellite positioning receiver.

Further provided is a computer program as summarised above, embodied on a computer readable medium, which is preferably a non-volatile medium.

According to another aspect of the invention, there is provided a satellite positioning receiver comprising:
an RF front-end, adapted to receive satellite signals from a satellite positioning system;
an analogue-to-digital converter, adapted to digitise the received satellite signals, to generate satellite signal samples;
a memory; and
a processor, adapted to control the RF front-end, the analogue-to-digital converter, and the memory to:
   (i) receive and digitise first satellite signals using a first set of parameters, to produce a first block of satellite signal samples, and to store the first block in the memory;
   (ii) receive and digitise second satellite signals using the first set of parameters, to produce a second block of satellite signal samples, and to store the second block in the memory;
   (iii) receive and digitise third satellite signals using a second set of parameters, to produce a third block of satellite signal samples, and to store the third block in the memory; and
   (iv) receive and digitise fourth satellite signals using the second set of parameters, to produce a fourth block of satellite signal samples, and to store the fourth block in the memory,
wherein a first time interval between the reception of the first and second satellite signals is longer than a second interval between the reception of the third and fourth satellite signals,
the duration of each of the first and second intervals is predetermined, and
the first and second sets of parameters are chosen such that a resource consumed in each of steps (i) and (ii) is greater than a corresponding resource consumed in each of steps (iii) and (iv).

Also provided is a satellite positioning receiver comprising:
an RF front-end, adapted to receive satellite signals from a satellite positioning system;
an analogue-to-digital converter, adapted to digitise the received satellite signals, to generate satellite signal samples;
a memory; and
a processor, adapted to control the RF front-end, the analogue-to-digital converter, and the memory to:
   (i) receive and digitise first satellite signals using a first set of parameters, to produce a first block of satellite signal samples, and store the first block in the memory;
   (ii) receive and digitise second satellite signals using the first set of parameters, to produce a second block of satellite signal samples, and store the second block in the memory; and
   (iii) receive and digitise third satellite signals using a second set of parameters, to produce a third block of satellite signal samples, and store the third block in the memory,
wherein a first time interval between the reception of the first and second satellite signals is greater than a second interval between the reception of the third satellite signals and the nearest in time of the first and second satellite signals,
the first and second intervals have predetermined durations, and
the first and second sets of parameters are chosen such that a resource consumed in each of steps (i) and (ii) is greater than a corresponding resource consumed in step (iii).

A satellite positioning receiver according to embodiments of the present invention may be incorporated in a camera. This may be advantageous for determining the positions at which photographs are taken, using the camera.

The invention will now be described by way of example with reference to the accompanying drawings, in which:
Fig 1 is a block diagram of a satellite positioning receiver according to an embodiment of the invention;
Fig. 2 is a flowchart for a method of recording satellite signals for later processing, according to a first exemplary embodiment;
Fig. 3 is a flowchart for a method of recording satellite signals for later processing, according to a second exemplary embodiment; and
Fig. 4 is a flowchart of a method of processing recorded satellite signals, according to an embodiment.
Fig. 5 illustrates a pattern of snapshots captured according to an exemplary implementation.

The "Capture-and-Process" GNSS receiver, which is the subject of the present invention, offers significant advantages in comparison to its real-time counterpart. Many of the advantages, such as relatively low power consumption and low cost, arise from the fact that the final processing of the satellite signals is performed offline. One of the drawbacks of the "Capture-and-Process" approach is that all of the captured signal samples need to be stored in a memory until they are processed. Another drawback (as mentioned already, above) is that it is not known at the time of capture whether sufficiently strong signals have been recorded to enable the successful calculation of a position fix. To help solve the second problem, it would be desirable to frequently capture long blocks of signal samples at high resolution, so that greater sensitivity can be achieved in the subsequent processing to detect satellite signals. However, this approach not only exacerbates the first problem - the memory fills up faster, but also the power consumption increases thereby reducing battery life. The present inventors have recognised that there is a trade-off between the resources consumed in capturing snapshots of satellite signals and the desire to reliably calculate the position of the satellite positioning receiver, retrospectively.

According to embodiments of the present invention, blocks of satellite signal samples are recorded which have variable and predetermined properties. These properties are selected so that individual snapshots of each type consume different amounts of resources. These different types of snapshot can then be scheduled in a temporal pattern that exploits the typical usage scenarios for the satellite positioning receiver.

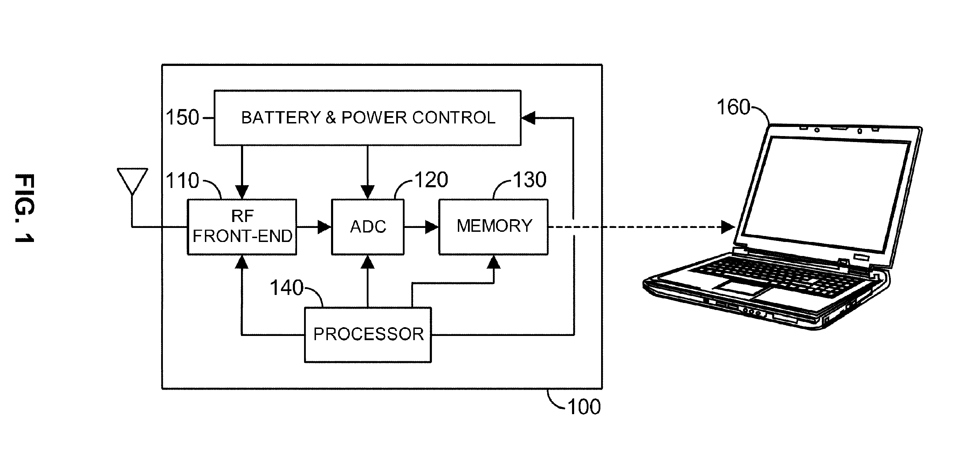

Fig. 1 shows a satellite positioning receiver 100 according to an embodiment of the invention. In this embodiment, for the sake of explanation, the receiver 100 is a GPS receiver. The receiver 100 includes an RF front-end 110, an analogue-to-digital converter (ADC) 120, and a memory unit 130. Each of these is under the direct control of a processor 140. Additionally, the processor 140 is able to control the supply of power to the RF front-end 110 and the ADC 120 via a battery and power control circuit 150. Note that, for clarity, only the controlled power lines are shown, that is the memory 130 and processor 140 also receive power from the battery and power control circuit 150. The input of the RF front-end 110 is coupled to an antenna for receiving GPS satellite signals. The operation of the RF front-end 110 may be substantially similar to that of a conventional Capture-and-Process receiver. It down-converts the satellite signals to an intermediate frequency, typically including some filtering, and outputs the resulting IF signals to the ADC 120. Note that, in the case of a direct conversion receiver, the "intermediate frequency" may be zero. The ADC 120 is configured to sample the IF signals received from the RF front-end 110, in order to digitise the satellite signals contained therein. The output of the ADC 120 is a stream of satellite signal samples. The signal samples contain all available satellite signals, which remain modulated by each satellite's spreading code. The output of the ADC 120 is provided as input to the memory 130. The signal samples are stored in this memory until the time comes for them to be processed to calculate a position fix. According to embodiments of the present invention, the processor 140 controls how and when the satellite signals are received by the RF front-end 110, digitised by the ADC 120, and stored in the memory 130.

Fig. 1 also shows a Personal Computer (PC) 160, to which the receiver 100 can be connected. When this connection is established, the signal samples stored in the memory 130 of the receiver 100 can be uploaded to the personal computer 160. The PC 160, using its greater processing and power resources, can process the retrieved signal samples in order to calculate a position fix from each snapshot.

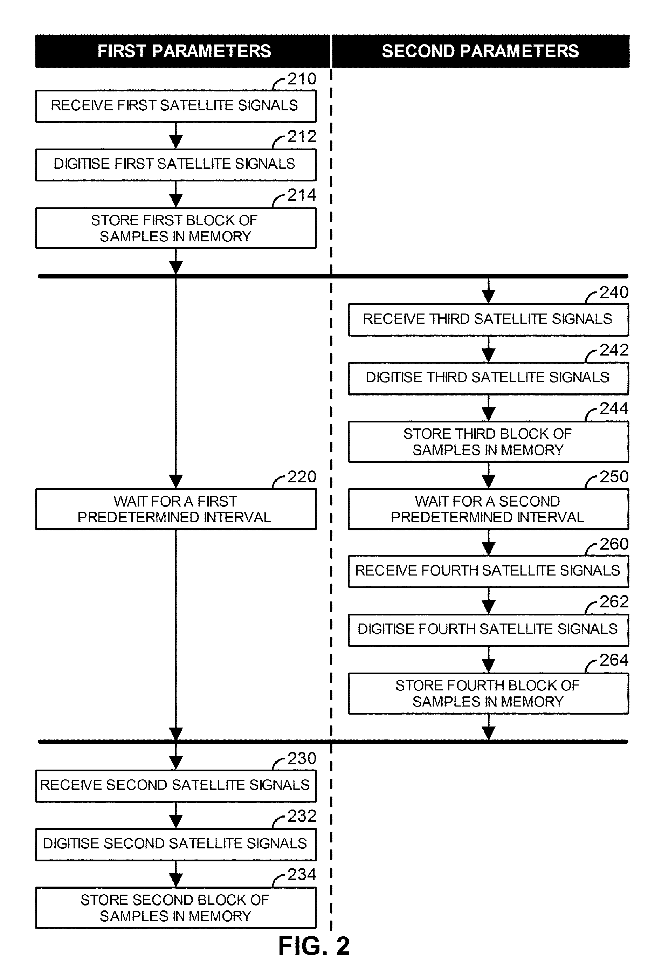

A method according to a first embodiment of the invention will now be described, with reference to Fig. 2. The method begins with the processor 140 causing the RF front-end 110 to enter a high-power state by sending an appropriate control signal to the battery and power control circuit 150 and controlling the RF front-end 110 to receive first satellite signals (step 210). Substantially simultaneously, the processor 140 signals the battery and power control circuit 150 to supply power to the ADC 120 and controls the ADC 120 to digitise the satellite signals being received via the front-end 110. The processor also activates the memory 130 and controls it to store the signal samples being generated by the ADC 120. The processor controls the front-end 110, ADC 120, and memory 130, to record this first block of satellite signal samples according to a predetermined first set of parameters or attributes. The set of parameters includes the duration T_{C1} of the capture (that is, the length of time during which the satellite signals are collected); and the bit-resolution N_{C1} of the capture (that is, the number of bits used to store each digital sample generated by the ADC 120).

The processor 140 then waits for a predetermined interval I_{C1} (step 220). After this interval, the processor 140 initiates the capture of another block of signal samples, with the same set of parameters, T_{C1}, N_{C1}. As before, this comprises controlling the front-end 110 to receive second satellite signals (step 230); controlling the ADC 120 to digitise the second satellite signals (step 232); and controlling the memory 130 to store the resulting second block of satellite signal samples, generated by the ADC, in the memory 130 (step 234).

During the interval I_{C1} between the capture of the first and second blocks of samples, the processor commands the GPS receiver to capture two more blocks of samples. The parameters for the capture of these third and fourth blocks are chosen so that each capture-operation consumes a smaller amount of resources than the capture of either the first or the second block. In the present embodiment, both the duration T_{C2} of the capture and the bit-resolution N_{C2} of the capture are reduced, compared with the first and second captures. Since the satellite signals are recorded over a shorter duration and with lower resolution, the data-volume (that is, amount of memory consumed) is reduced. Also, because the receiver is active for a shorter period T_{C2}, energy consumption is reduced. Depending upon the design of the ADC 120, its energy consumption may also be reduced due to sampling the received satellite signals at a reduced bit-resolution.

In greater detail, the processor 140 controls the RF front-end to receive third satellite signals (step 240); controls the ADC 120 to digitise the third satellite signals (step 242); and controls the memory 130 to store the third block of satellite signal samples, generated by the ADC, in the memory 130 (step 244). In step 250, the processor 140 waits for a predetermined interval I_{C2} which is shorter than the interval between the first and second captures. At the end of this predetermined interval, the processor 140 activates the front-end, ADC, and the memory again. Once again, using the second set of capture parameters, the processor controls the front-end to receive fourth satellite signals; controls the ADC to digitise the fourth satellite signals; and controls the memory 130 to store the fourth block of satellite signal samples generated by the ADC (steps 260, 262 and 264, respectively).

As will be apparent to the skilled person by now, the capture of the first and second satellite signals, with a predetermined interval between them, constitutes one mode of operation and the stored first and second blocks of samples represent one type of snapshot. The capture of the third and fourth satellite signals, with a shorter predetermined interval between them, constitutes a second mode of operation, and the third and fourth blocks of samples constitute snapshots of a second different type. During normal operation, the steps of Fig. 2 will be iterated continually. This leads to a pattern in which the first type of snapshot (which is more resource-intensive) is captured relatively less frequently; and the second type of snapshot (which is less resource-intensive) is captured relatively more frequently. Note that, in the example of Fig. 2, there is not necessarily any synchronisation between the periodic capture of blocks of samples in the first mode (that is, with the first set of parameters) and the capture of blocks of samples in the second mode (with the second set of parameters). In other words, the two modes can operate substantially independently.

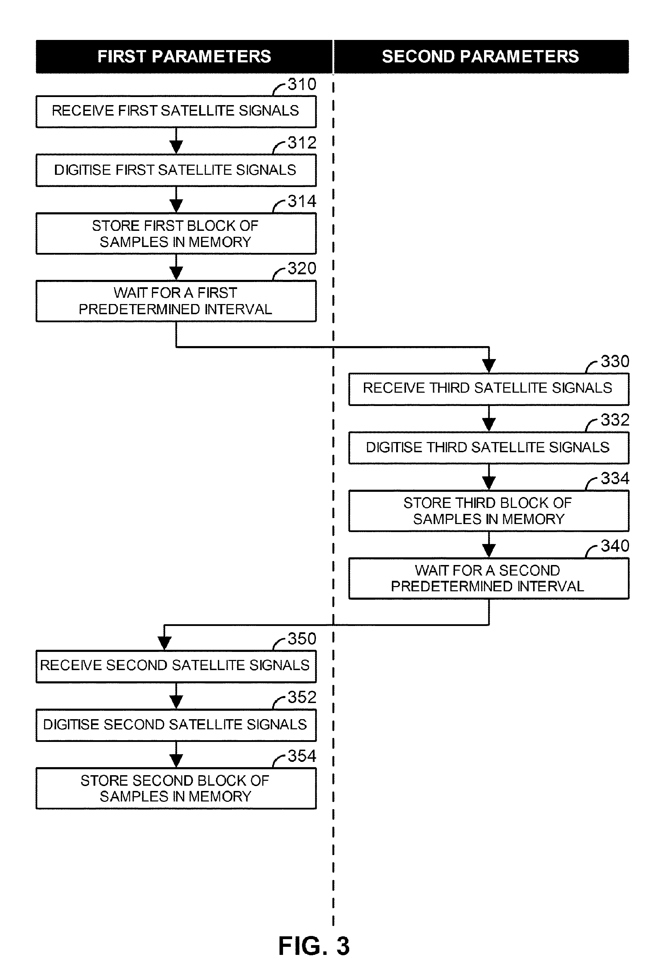

A method according to a second embodiment of the invention will now be described, with reference to Fig. 3. In this embodiment, snapshots of satellite signals are again captured in two different modes (that is, with two different sets of parameters), but the pattern of the captures is determined by the time intervals between captures of one type and captures of the other type.

In greater detail, the method of Fig. 3 begins by receiving (step 310), digitising (step 312), and storing (step 314) satellite signals using the first set of parameters. The steps 310, 312, and 314, are substantially identical to the steps 210, 212, and 214 of Fig. 2. After the first block of signal samples has been stored in step 314, the processor waits for a predetermined interval (step 320). It then controls the receiver to capture satellite signals in the second mode (that is with the second set of parameters). For ease of comparison with Fig. 2, this is referred to as a "third" capture. It comprises the steps of receiving third satellite signals (step 330); digitising the third satellite signals (step 332); and storing the resulting third block of satellite signal samples in the memory 130 (step 334). Since these operations are carried out according to the second set of parameters, the resources consumed are less than those consumed in steps 310, 312, and 314. The skilled person will appreciate that steps 330, 332, and 334 are substantially identical to the corresponding steps 240, 242, and 244 of Fig. 2.

The processor 140 again waits for a predetermined interval (step 340). After this delay, it reverts to the first mode (first set of parameters) again and receives, digitises, and stores second satellite signals in steps 350, 352, and 354. Once again, these steps are substantially identical to their counterparts, steps 230, 232, and 234 in the embodiment of Fig. 2.

In normal operation, the pattern of Fig. 3 will be iterated, so that the receiver alternates between capturing a snapshot in the first mode and capturing a snapshot in the second mode. However, note that since the parameters used in the two different modes are the same as those described above, for the first embodiment, each block of samples captured with the first set of parameters (T_{C1} and N_{C1}) is effectively a superset of the block of samples that would have been captured if the second set of parameters (T_{C2} and N_{C2}) had been used. The effect of this is that a snapshot of at least a certain minimum size is captured more often (with the delay interval of each of steps 320 and 340); and a snapshot of larger size is captured less often (with an interval defined by the sum of the delays in steps 320 and 340). Thus, even though the interval between successive captures using the first set of parameters may be the same as the interval between successive captures using the second set of parameters, the overall effect is still that more resource-intensive snapshots are captured less frequently; and less resource-intensive snapshots are - effectively - captured effectively more frequently.

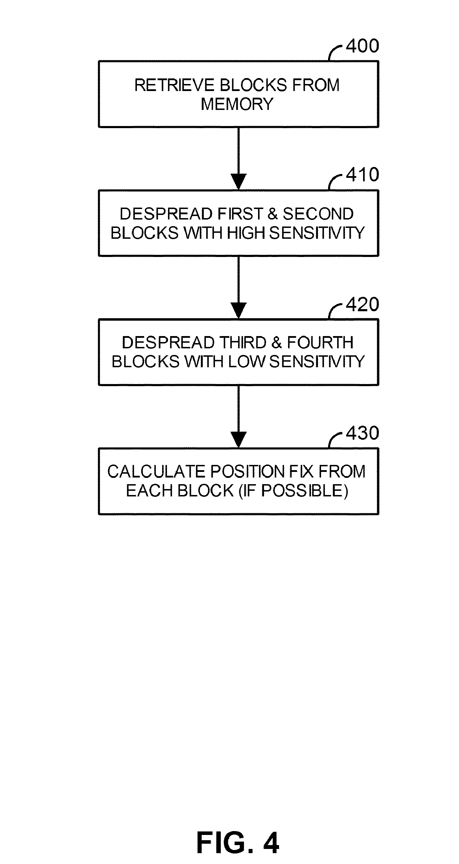

Fig. 4 is a flow chart illustrating a method of processing snapshots, such as those captured in the methods of Fig. 2 and Fig. 3, in order to calculate position fixes. In step 400, the personal computer 160 retrieves the first to fourth blocks of signal samples from the memory 130 of the GPS receiver 100. In step 410, the computer de-spreads the GPS signals contained in the samples of the first and second blocks. This is done with high sensitivity. For example, the de-spreading operation may comprise correlation with a long coherent integration period, since the first and second blocks have a relatively longer duration of capture, T_{C}. In step 420, the computer de-spreads the GPS signals contained in the signal samples of the third and fourth blocks. This is done with relatively lower sensitivity. For example, because the capture duration T_{C} of these blocks is shorter, the maximum coherent integration period that can be used may be correspondingly reduced. This has the effect that the de-spreading of the first and second blocks is likely to be more sensitive to GPS signals than the de-spreading of the third and fourth blocks.

In step 430, the computer attempts to calculate a position fix from the results of de-spreading each block of satellite signal samples. Because of the greater sensitivity of de-spreading the first and second blocks, there is an increased likelihood that the computer will be able to calculate a position fix from these blocks, potentially even if they contain relatively weaker satellite signals. Note that the processing of stored satellite signal samples to calculate a position fix will be familiar to those skilled in the art and may be carried out using any suitable conventional approach.

A detailed implementation example will now be described, with reference to a typical usage scenario of a portable electronic device incorporating the GPS receiver 100. While the user of the device moves around, there are sometimes long periods of poor signal quality and, at other times, short periods of goods signal quality. For example, during the user's typical journey to his/her workplace, each morning, the device may experience:
1. A long period of poor signal reception (while indoors at home),
2. A short period of excellent signal reception (outdoors, walking to the train station),
3. A moderate period of medium-quality signal reception (travelling by train),
4. Another short period of excellent signal reception (outdoors, walking from the train station to the office),
5. Another long period of poor signal reception (indoors at the office).

In order to cope with this intended usage scenario, according to an embodiment of the present invention, three sets of parameters may be defined for different modes of capture, along with three associated time intervals, to define how frequently snapshots are captured for each mode. The parameters T_{C} and N_{C} of the captures and corresponding time intervals are shown in Table 1.

**Table 1**

| Capture Mode | T_{C} | N_{C} | I_{C} |
|---|---|---|---|
| | (ms) | (bits) | (s) |
| Logging | 200 | 1 | 60 |
| Outdoor | 100 | 1 | 15 |
| Indoor | 500 | >1 | 600 |

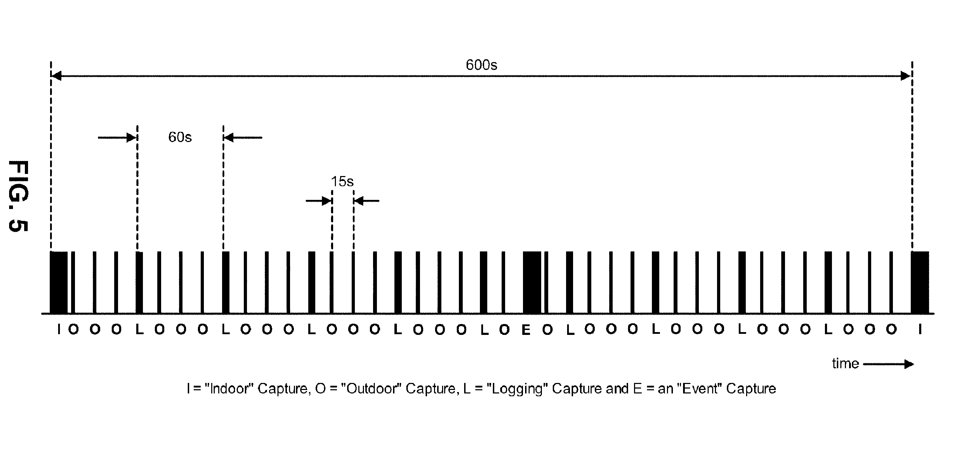

The resulting pattern of snapshots is illustrated in Fig. 5, where the letter "I" denotes a capture using the "Indoor" parameters; the letter "O" denotes captures using the "Outdoor" parameters; and the letter "L" denotes captures using the "Logging" set of parameters. Note that this pattern can be implemented using either a method like that of Fig. 2 or that of Fig. 3, since the data stored according to the different types of snapshot are subsets of one another. That is, an "outdoor" snapshot can be derived from a subset of a "logging" snapshot, because (in this example) the "logging" snapshot has a duration T_{C} that is twice as long. Likewise, the "logging" snapshot can be derived as a subset of the data in an "indoor" snapshot, because the "indoor" snapshot is 2.5 times as long and has a higher bit-resolution. The pattern in Fig. 5 also shows an "Event" capture ("E"). This is a capture triggered manually by a user or by an application running on the portable device, in order to record the position of the receiver 100 at an event of some significance. For example, an event-capture may be triggered by taking a photograph, in the case that the portable electronic device incorporating the receiver 100 is a smartphone with a camera. In this example, the set of parameters for the "event" mode is chosen to be the same as for the "indoor" mode, since this guarantees high sensitivity and therefore a high likelihood of being able to calculate a position fix.

The number of different sets of parameters and the values of those parameters can be chosen according to the desired use. One possible scheme for designing the parameters is as follows. This example assumes just two modes (sets of parameters).

### Given

- battery capacity (E_{battery})
- the desired product usage lifetime (for example, 1 week before recharging the battery) ("Lifetime")
- energy required to do a capture of sufficient quality/duration for a position fix with outdoor signals (Power consumption ^{*} duration of an outdoor quality capture) (Eₒᵤₜ)
- energy required to do a capture of sufficient quality/duration for a position fix with maximum reasonable sensitivity to attempt an indoor fix (Eᵢₙ)

### Choose

- the shortest interval for which the user is expected to be outside (e.g. a typical duration of walk from bus stop to office) (Iₒᵤₜᵤₛₑᵣ)
   Then this determines
- the interval between outdoor captures so that the logger always has at least one capture when the user goes outside (Iₒᵤₜ = Iₒᵤₜᵤₛₑᵣ)
- number of outdoor captures (Nₒᵤₜ = Lifetime/lₒᵤₜ)
- the energy used for outdoor captures (Eₜₒₜₐₗₒᵤₜ = Nₒᵤₜ*Eₒᵤₜ)

Which in turn determines
- the energy remaining for allocating to indoor captures over the usage lifetime (E_{remaining} = E_{battery} - Eₜₒₜₐₗₒᵤₜ)
- the number of indoor captures which can be carried out (Nᵢₙ = E_{remaining}/Eᵢₙ)
- the interval between the scheduling of indoor captures (do captures as often as the battery has energy to be able to do so) (Iᵢₙ = Lifetime/Nᵢₙ)

In order for the personal computer 160 to process the retrieved blocks of satellite signal samples appropriately, it will typically need to know the parameters with which they were captured. This will allow the personal computer 160 to interpret the data contained in each block correctly. In some cases, the pattern of captures may be fixed in advance and known to both the receiver 100 and the personal computer 160. In this case, no further information is needed for the computer 160 to correctly process the blocks. However, in other cases, the computer 160 will not always be aware of the pattern of captures, in advance. For example, the various sets of parameters, for the different modes, may be user-configurable at the receiver 100. In this case, it is desirable for the parameters to be stored in the memory in association with the blocks of samples. Then, when the computer 160 retrieves the blocks from the memory (in step 400), it can first read the parameters and then use these to correctly interpret the blocks. In one example, each block of signal samples may be stored in a separate file and the corresponding set of parameters may be written, by the processor 140, to a header of the file at the time each block is stored. However, this may be inefficient when a large number of snapshots are captured with similar parameters. Therefore, in an alternative example, the capture-parameters may be stored in a separate record in the memory. This record may specify the parameters for each type of snapshot (that is, for each mode), together with an indication of the pattern with which snapshots of the different types are captured. For example, the record may comprise a table like that of Table 1 and, optionally, a sequence of symbols indicating the pattern, as exemplified in Fig. 5.

In the first and second embodiments described above with reference to Figs. 2 and 3, it was assumed that each of the front-end 110 and ADC 120 were deactivated (that is, controlled to enter a low-power state or powered down) in the intervals between the capture of signals. This may help to minimise the overall power consumption of the GPS receiver 100, since it avoids unnecessary energy dissipation while waiting to perform a capture. However, this is not essential. In other embodiments, some or all of the components of the receiver 100 may remain active between captures. Furthermore, if the memory 130 is a non-volatile memory, then it too may be powered down during intervals between read and/or write activity. If the memory is a volatile memory, such as a Random Access Memory (RAM), it will typically be necessary to keep it in a powered state between captures, so that the stored data is retained.

In one example, the RF front-end 110 may continuously receive and downconvert satellite signals to an intermediate frequency. The processor 140 may then control the ADC 120 and (non-volatile) memory 130 to switch on only when they are needed to digitise signals and store samples, respectively. As those skilled in the art will appreciate, any combination of one or more of the components of the receiver 100 may be maintained in an active state or switched on only when needed. The precise configuration chosen may depend upon the intended use of the GPS receiver 100.

In the embodiments described above, the parameters of each capture included the duration T_{C} and bit-resolution N_{C}. However, the range of parameters which may be varied so as to consume resources differently is not limited to these examples. For example, the processor 140 may control the ADC 120 to digitise the signals using a different sampling frequency in different capture modes. A higher sampling frequency may correspond to more intensive resource usage - for example, because the increased number of samples generated will require increased memory capacity to store them. Power consumption may also be affected.

Note that some of the parameters of capture may be related or interdependent. For example, the bit-resolution with which samples are stored in the memory 130 may be the same as or less than the bit-resolution of the samples generated by the ADC 120. That is, it is possible that not all of the bits generated by the ADC 120 will be stored in the memory 130. Similarly, the effective sampling frequency of the signal samples stored in the memory 130 may be the same as or less than the sampling frequency used by the ADC 120. In some cases, it will be desirable to retain all samples. In other cases, the number of samples may be reduced by decimation. Suitable down-sampling techniques will be familiar to those skilled in the art.

The variation in certain parameters may have a proportionally greater impact on certain resources than others. For example, the energy consumed in receiving, digitising, and storing one block of samples may be dominated by the capture-duration T_{C}, since this may determine the length of time for which all components of the GPS receiver 100 are active. Thus, doubling the capture duration T_{C} may lead to a doubling in the energy consumed; whereas doubling the sampling frequency of the ADC 120 may result in a more modest increase in the energy consumed. Meanwhile, this variation would result a doubling in the memory capacity occupied (assuming no samples were discarded).

In the embodiment described above with reference to Fig. 4, the processing of the blocks of samples to calculate a position fix was performed by a computer 160 which is separate from the satellite positioning receiver 100. However, in other embodiments, the processor 140 of the satellite positioning receiver may be adapted to perform this processing itself. In this case, the blocks of samples may be retrieved from memory and processed (as illustrated in Fig. 4) either (i) upon receipt of a request from a software application or a user of the device to determine the last known position of the device; (ii) upon connection of the device to an external power source; and/or (iii) in response to some other trigger-indication.

Needless to say, although the examples above have been described in the context of GPS, those skilled in the art will appreciate that the same principles can be applied equally to other GNSS systems, including but not limited to Galileo and Glonass. In some embodiments, a satellite positioning receiver may be adapted to receive satellite signals from two or more GNSSs. This may allow improved geographical coverage and/or better positioning accuracy, because more SVs are available for use in calculating a position fix. In some embodiments, a more resource-intensive capture may comprise receiving, digitising and storing signals from a larger number of different GNSSs; whereas a less resource-intensive capture may comprise receiving, digitising and storing signals from a smaller number of GNSSs.

As will be clear from the foregoing examples, the resource consumed may comprise electrical energy or data storage or both, but is not necessarily limited to these resources. The data storage consumed may comprise a non-transitory computer-readable storage medium, including but not limited to a solid state memory, optical disk, magnetic disk, or other media known to those skilled in the art. The electrical energy may be provided by a battery.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method of recording satellite signals for later processing to derive position information, the method comprising:
(i) receiving (210) and digitising (212) first satellite signals using a first set of parameters, to produce a first block of satellite signal samples, and storing (214) the first block in a memory;
(ii) receiving (230) and digitising (232) second satellite signals using the first set of parameters, to produce a second block of satellite signal samples, and storing (234) the second block in the memory;
(iii) receiving (240) and digitising (242) third satellite signals using a second set of parameters, to produce a third block of satellite signal samples, and storing (244) the third block in the memory; and
(iv) receiving (260) and digitising (262) fourth satellite signals using the second set of parameters, to produce a fourth block of satellite signal samples, and storing (264) the fourth block in the memory,
wherein a first time interval between the reception of the first and second satellite signals is longer than a second interval between the reception of the third and fourth satellite signals,
the duration of each of the first and second intervals is predetermined, and
the first and second sets of parameters are chosen such that a resource consumed in each of steps (i) and (ii) is greater than a corresponding resource consumed in each of steps (iii) and (iv).

2. The method of claim 1, wherein at least one of steps (iii) and (iv) is performed during the first time interval.

3. A method of recording satellite signals for later processing to derive position information, the method comprising:
(i) receiving (310) and digitising (312) first satellite signals using a first set of parameters, to produce a first block of satellite signal samples, and storing (314) the first block in a memory;
(ii) receiving (350) and digitising (352) second satellite signals using the first set of parameters, to produce a second block of satellite signal samples, and storing (354) the second block in the memory; and
(iii) receiving (330) and digitising (332) third satellite signals using a second set of parameters, to produce a third block of satellite signal samples, and storing (334) the third block in the memory,
wherein a first time interval between the reception of the first and second satellite signals is greater than a second interval between the reception of the third satellite signals and the nearest in time of the first and second satellite signals,
the first and second intervals have predetermined durations, and
the first and second sets of parameters are chosen such that a resource consumed in each of steps (i) and (ii) is greater than a corresponding resource consumed in step (iii).

4. The method of any of claims 1 to 3, further comprising iterating the steps (i) to (iv) or (i) to (iii) in a predetermined pattern.

5. The method of any preceding claim, wherein the resource consumed comprises at least one of:
electrical energy; and
storage capacity in the memory.

6. The method of any preceding claim, wherein the first and second sets of parameters differ by at least one, or any combination, of:
the length of a time interval during which the satellite signals are received and digitised to be stored;
a sampling frequency at which the satellite signals are digitised;
an effective sampling frequency of the block of signal samples stored in the memory;
a first number of quantised levels with which the satellite signals are digitised; and
a second number of quantised levels with which the satellite signals are stored in the memory.

7. The method of claim 6, wherein at least one, or any combination, of:
the length of the time interval is longer for the first set of parameters than the second set;
the sampling frequency is greater for the first set of parameters than the second set;
the effective sampling frequency is greater for the first set of parameters than the second set;
the first number of quantised levels is greater for the first set of parameters than the second set; and
the second number of quantised levels is greater for the first set of parameters than the second set.

8. The method of any preceding claim, further comprising storing in the memory a description of the first and second sets of parameters, comprising either:
storing a description of the first set of parameters in association with each of the first and second blocks of samples, respectively, and storing a description of the second set of parameters in association with each of the third and fourth blocks of samples, respectively; or
storing a description of the first and second sets of parameters, together with an indication of the blocks of samples to which each set of parameters relates.

9. The method of any preceding claim wherein the first set of parameters is chosen so as to provide greater sensitivity for the detection of satellite signals than the second set of parameters.

10. The method of any preceding claim further comprising:
retrieving (400) each block of samples from the memory; and
processing (410, 420) the block of samples to identify individual satellite signals contained in the samples,
wherein the processing (410) applied to the first and second blocks is more sensitive to satellite signals than the processing (420) applied to the third and/or fourth blocks.

11. The method of claim 10, wherein the more sensitive processing (410) applied to the first and second blocks comprises at least one of:
correlation over a longer coherent integration period;
correlation over a longer non-coherent integration period; and
correlation with a function that has a greater number of quantised levels.

12. A computer program comprising computer program code means adapted to control a satellite positioning receiver and optionally a computer to perform all the steps of any preceding claim when said program is executed.

13. A computer program as claimed in claim 12 embodied on a computer readable medium.

14. A satellite positioning receiver (100) comprising:
an RF front-end (110), adapted to receive satellite signals from a satellite positioning system;
an analogue-to-digital converter (120), adapted to digitise the received satellite signals, to generate satellite signal samples;
a memory (130); and
a processor (140), adapted to control the RF front-end (110), the analogue-to-digital converter (120), and the memory (130) to:
(i) receive and digitise first satellite signals using a first set of parameters, to produce a first block of satellite signal samples, and to store the first block in the memory;
(ii) receive and digitise second satellite signals using the first set of parameters, to produce a second block of satellite signal samples, and to store the second block in the memory;
(iii) receive and digitise third satellite signals using a second set of parameters, to produce a third block of satellite signal samples, and to store the third block in the memory; and
(iv) receive and digitise fourth satellite signals using the second set of parameters, to produce a fourth block of satellite signal samples, and to store the fourth block in the memory,
wherein a first time interval between the reception of the first and second satellite signals is longer than a second interval between the reception of the third and fourth satellite signals,
the duration of each of the first and second intervals is predetermined, and
the first and second sets of parameters are chosen such that a resource consumed in each of steps (i) and (ii) is greater than a corresponding resource consumed in each of steps (iii) and (iv).

15. A satellite positioning receiver comprising:
an RF front-end (110), adapted to receive satellite signals from a satellite positioning system;
an analogue-to-digital converter (120), adapted to digitise the received satellite signals, to generate satellite signal samples;
a memory (130); and
a processor (140), adapted to control the RF front-end, the analogue-to-digital converter, and the memory to:
(i) receive and digitise first satellite signals using a first set of parameters, to produce a first block of satellite signal samples, and store the first block in the memory;
(ii) receive and digitise second satellite signals using the first set of parameters, to produce a second block of satellite signal samples, and store the second block in the memory; and
(iii) receive and digitise third satellite signals using a second set of parameters, to produce a third block of satellite signal samples, and store the third block in the memory,
wherein a first time interval between the reception of the first and second satellite signals is greater than a second interval between the reception of the third satellite signals and the nearest in time of the first and second satellite signals,
the first and second intervals have predetermined durations, and
the first and second sets of parameters are chosen such that a resource consumed in each of steps (i) and (ii) is greater than a corresponding resource consumed in step (iii).
